# EUROPÄISCHE PATENTSCHRIFT

(11) **EP 0 683 384 B1**
(45) Veröffentlichungstag und Bekanntmachung des Hinweises auf die Patenterteilung: **02.05.1997**
(21) Anmeldenummer: 94107788.5
(22) Anmeldetag: 19.05.1994
(51) Int. Cl.: G01J 3/51

(54) **Einrichtung zur Ermittlung des Farbwerts eines Lichtstroms**
Apparatus for measuring the colour valve of a luminous flux
Dispositif pour déterminer les valeurs de couleur d'un flux lumineux

(43) Veröffentlichungstag der Anmeldung: 22.11.1995
(73) Patentinhaber: Schablonentechnik Kufstein Aktiengesellschaft, A-6330 Kufstein (AT)
(72) Erfinder: Juffinger, Josef, A-6335 Thiersee (AT)
(74) Vertreter: TER MEER STEINMEISTER & PARTNER GbR

(56) Entgegenhaltungen:
- EP-A- 0 491 131
- GB-A- 1 411 540

## Beschreibung

Die Erfindung betrifft eine Einrichtung gemäß dem Oberbegriff des Patentanspruchs 1 zur Ermittlung des Farbwerts eines Lichtstroms.

Im allgemeinen werden bei der Ermittlung des Farbwerts einer Strahlung drei Teillichtströme der zu vermessenden Strahlung erzeugt und über drei Farbfilter zu Photodioden oder Phototransistoren geführt und von diesen in drei entsprechende elektrische Signale umgesetzt. Andererseits kann der gesamte zu vermessende Lichtstrom auch von einem optischen Gitter oder einem Prisma in seine spektralen Anteile zerlegt werden, und diese werden auf ein Diodenarray projeziert, welches meist aus 256 oder 512 Dioden besteht.

Im Falle der Zerlegung des Gesamtlichtstroms in drei Teillichtströme spricht man von einer RGB-Messung des Lichts, da man diese Messung meist in den drei Farbbereichen Rot, Grün und Blau vornimmt. Jeder der drei Farbfilter läßt jeweils einen anderen Teil des Wellenlängenbereichs des aufgenommenen Lichtstroms zu der ihm nachgeschalteten Photodiode gelangen. Die Photodioden geben proportional zur Intensität der Beaufschlagung und ihrer eigenen Empfindlichkeit einen Strom ab, der als Meßsignal verwendet wird. Die hier gewonnene Farbinformation ist meist dürftig, da die zwischen den drei Basisfarben Rot, Grün und Blau liegenden Spektralfarben nur um den jeweiligen Filterfaktor abgemindert festgestellt werden. Auch weisen die üblicherweise für eine RGB-Messung verwendeten Farbfilter einen breiten Durchlaßbereich von etwa 100 nm auf und dementsprechend wird von der nachgeschalteten Diode ein Mittelwert der Intensität über den ganzen Durchlaßbereich gemessen.

Allgemein läßt sich feststellen, daß je weiter Farbkomponenten am Farbenkreis oder in einer anderen adäquaten Farbendarstellung voneinander entfernt liegen, ihr Mischwert immer näher bei den Farben Weiß oder Grau liegt. Mißt man Farben nur in den Komponenten Rot, Grün und Blau, hat man für eine spätere Synthese dieser Farben auch nur diese Werte verfügbar und die aus diesen zusammengesetzten Farben erscheinen dann weißlich milchig bei hellen Farbtönen oder stumpf bis grau bei dunklen Tönungen. Brillante Farben sind im Gegensatz hierzu stets reine Spektralfarben oder Mischungen von eng benachbarten Spektralfarben.

Eine zu brillanten Farben führende Farbmessung erhält man mit Hilfe der spektralen Zerlegung des zu messenden Lichtstroms mittels eines optischen Gitters oder eines Prismas, wie bereits oben erwähnt. Leider stellt man bei beiden Anordnungen erhebliche Lichtverluste fest. Bei dem Gitter resultieren sie aus der Tatsache, daß auch die anderen Beugungsordnungen Licht erhalten. Bei Prismen wird besonders für kurze Baulängen der optischen Einrichtung eine Mehrfach-Prismenanordnung notwendig, die starke Reflexions- und Absorptionsverluste zeigt, und durch die der umbaute Raum im krassen Widerspruch zur häufig notwendigen Miniaturisierung der Meßelektronik steht. Das erzeugte Spektrum ist trotzdem meist nur von geringer Länge und es werden deshalb fast ausschließlich Diodenarrays verwendet, deren auffälligster Nachteil ist, daß sie nur langsam ausgelesen werden können. Auch verlangt die feine spektrale Auflösung einen entsprechend engen und damit leider lichtschwachen Spalt, da sich sonst die Bilder des Spalts in den einzelnen Wellenlängenbereichen überlagern und die durch das Gitter oder Prisma erzielte Auflösung zunichte machen. Dieser Effekt verlangsamt das Auslesen erheblich.

Eine Einrichtung der gattungsgemäßen Art zur Ermittlung des Farbwerts eines Lichtstroms geht aus einem Prospekt der Firma OCLI, 2789 North-point Parkway, Santa Rosa, CA 95407-7397, als bekannt hervor. Diese bekannte Einrichtung weist einen nur eine Ausdehnungsrichtung aufweisenden, linearen Verlaufsfilter auf, durch den hindurch ein Lichtstrom auf eine Anzahl von Photodioden trifft, die in der Ausdehnungsrichtung des Verlaufsfilter nebeneinanderliegend angeordnet sind und zur Lieferung von Meßsignalen dienen, anhand derer der Farbwert berechnet wird. Die Photodioden sind in einem 256er Diodenarray vorhanden, das mit einer entsprechenden Auswerteschaltung für die Meßsignale verbunden ist. Vor dem Verlaufsfilter ist eine Fokussierungsoptik angeordnet, um den von einer Halogenlampe kommenden Lichtstrom nach Reflexion an einer Probe auf die Photodioden zu fokussieren.

Der Erfindung liegt die Aufgabe zugrunde, die Einrichtung der gattungsgemäßen Art so weiterzubilden, daß sie sich zur punktförmigen und lichtstarken Abtastung einer schnell bewegten Oberfläche eignet.

Die Lösung der gestellten Aufgabe ist im kennzeichnenden Teil des Patentanspruchs 1 angegeben. Vorteilhafte Ausgestaltungen der Erfindung sind den Unteransprüchen zu entnehmen.

Eine Einrichtung zur Ermittlung des Farbwerts eines Lichtstroms zeichnet sich erfindungsgemäß dadurch aus, daß
- der Lichtstrom über eine Mehrzahl von Lichtleitfasern zugeführt wird, deren Lichtaustrittsenden entlang einer oder mehrerer sich in der Ausdehnungsrichtung erstreckender Zeilen dicht nebeneinanderliegend angeordnet sind,
- die Fokussierungsoptik eine sich In der Ausdehnungsrichtung des Verlaufsfilters erstreckende Zylinderlinse enthält, und
- die Photodioden als PIN-Dioden ausgebildet sind.

Nur durch die Kombination sämtlicher angegebener Merkmale ist ein ausreichend schnelles Auslesen von Farbwerten auf der sich bewegenden Oberfläche möglich, wobei die Lichtleitfaseranordnung zusammen mit der Zylinderlinse den Vorteil der maximalen Lichtstromaufbringung auf das Photodiodenarray erbringt. Die Verwendung von separaten PIN-Photodioden im Diodenarray weist darüber hinaus den Vorteil einer geringstmöglichen Diodenkapazität auf, wodurch auch bei schwächeren Lichteinstrahlungen rasch ein entsprechender Diodenstrom einsetzt.

Die schnell bewegte Oberfläche kann z. B. die Mantelfläche eines Zylinders sein, auf den ein Muster aufgespannt ist, dessen Farben punktweise abgetastet werden sollen. Zu diesem Zweck wird der Zylinder, der als Voll- oder Hohlzylinder vorliegen kann, um seine Längsachse gedreht und mit ihm das auf seiner Zylindermantelfläche liegende Muster. Dieses wird punktweise beleuchtet, wobei alle Lichteingangsenden der Lichtleitfasern auf diesen Punkt ausgerichtet sind, um das von ihm zurückgeworfene Licht (durch Reflexion oder Streuung) zu erfassen. Werden die Beleuchtungseinrichtung und die Lichterfassungseinrichtung gleichmäßig entlang einer sich In Zylinderlängsrichtung erstreckenden Führung parallel zur Zylindermantelfläche bewegt, so lassen sich bei Drehung des Zylinders nacheinander dicht nebeneinanderliegende Farbpunkte vermessen, die entlang einer helischen Bahn auf der Zylindermantelfläche angeordnet sind.

Nach einer vorteilhaften Ausgestaltung der Erfindung sind die Fokussierungsoptik und der Verlaufsfilter einerseits sowie die Photodioden andererseits in der Ausdehnungsrichtung des Verlaufsfilters relativ zueinander verschiebbar, um eine Feinjustierung der Bauteile untereinander vornehmen zu können. Dabei können die Fokussierungsoptik und der Verlaufsfilter in einem gemeinsamen Rahmen eingespannt sein, der in Ausdehnungsrichtung des Verlaufsfilters verschiebbar gelagert ist. Durch den Rahmen wird eine Relativbewegung zwischen Verlaufsfilter und Fokussierungsoptik vermieden, wodurch die Justierarbeit erheblich erleichtert wird.

Nach einer weiteren Ausgestaltung der Erfindung ist der gemeinsame Rahmen in einem mittleren Spannkörper gehalten, der mit einem Grundkörper starr verbunden ist, welcher die Photodioden trägt. Die Photodioden sind dabei in einem Bauelement als Array vereinigt, welches auf einem Sockel sitzt, der am Grundkörper befestigt ist. Auf der dem Grundkörper abgewandten Seite des mittleren Spannkörpers ist mit diesem ein äußerer Spannkörper starr verbunden, welcher die Lichtaustrittsenden der Lichtleitfasern fest aufnimmt. Sämtliche der genannten Körper können dabei fest miteinander verbunden, z. B. verstiftet sein. Allerdings wirken dabei keine Spannkräfte auf das als Array ausgebildete Bauelement sowie auf den dieses Bauelement tragenden Sockel, da letzterer separat am Grundkörper befestigt ist und mechanisch nicht vom mittleren Spannkörper beaufschlagt wird.

Grundsätzliche können alle linearen Verlaufsfilter verwendet werden, die eine geeignete Bandpaßcharakteristik aufweisen, die z. B. bei 20 nm liegen kann. Andererseits hat es sich gezeigt, daß es zur späteren Synthese brillanter Mischfarben ausreichend ist, weniger als 256 Stützstellen, z. B. nur zehn Stützstellen in unterschiedlichen Bereichen des sichtbaren Spektrums vorzusehen, um unterschiedliche Farbkomponenten des von der Mustervorlage kommenden Lichtstroms erfassen zu können. Infolge der geringen Anzahl erforderlicher Stützstellen ist daher der Einsatz von separaten PIN-Photodioden, die eine relativ große Ausdehnung aufweisen, möglich, was andererseits den Vorteil einer schnelleren Auslesung mit sich bringt, und zwar auch dann, wenn der zu messende Lichtstrom relativ schwach ist. Wie bereits erwähnt, weisen die PIN-Photodioden nur eine geringe Diodenkapazität auf, so daß sie ein hohes Ansprechverhalten besitzen.

Nach einer anderen Ausgestaltung der Erfindung ist jede der Photodioden über einen Vorverstärker mit einer Parallelschaltung von drei Widerständen verbunden, die ausgangsseitig mit unterschiedlichen Eingängen von insgesamt drei vorhandenen Endverstärkern verbunden sind. Durch die drei vorhandenen Endverstärker werden somit drei Farbsignale X, Y, Z geliefet, aus denen später Mischfarben synthetisiert werden, wobei zur Erstellung jedes der Farbsignale X, Y und Z Komponenten von alten Meßsignalen sämtlicher verwendeter Photodioden herangezogen werden. Allerdings werden diese Komponenten abhängig von derjeweiligen Stellung der Photodioden im Spektrum unterschiedlich gewichtet. Die Zusammenhänge sind aus der Farbmetrik allgemein bekannt und brauchen hier nicht im einzelnen erläutert zu werden.

Nachfolgend wird ein Ausführungsbeispiel der Erfindung unter Bezugnahme auf die Zeichnung näher beschrieben. Es zeigen:
**Figur 1** eine an sich bekannte, normierte Farbtafel mit virtuellen, im Spektrum nicht vorhandenen Farben X, Y und Z zur Erläuterung des Hintergrunds der Erfindung;
**Figur 2** einen Längsschnitt durch eine erfindungsgemäße Einrichtung zur Ermittlung des Farbwerts eines Lichtstroms;
**Figur 3** eine Draufsicht auf die Einrichtung nach Figur 2, teilweise im Schnitt dargestellt;
**Figur 4** eine Teilansicht der Einrichtung nach Figur 2 in Richtung auf die lichtaustrittsseitigen Stirnflächen von Lichtleitfasern; und
**Figur 5** eine ausgangsseitige Beschaltung von Photodioden der Einrichtung nach Figur 2.

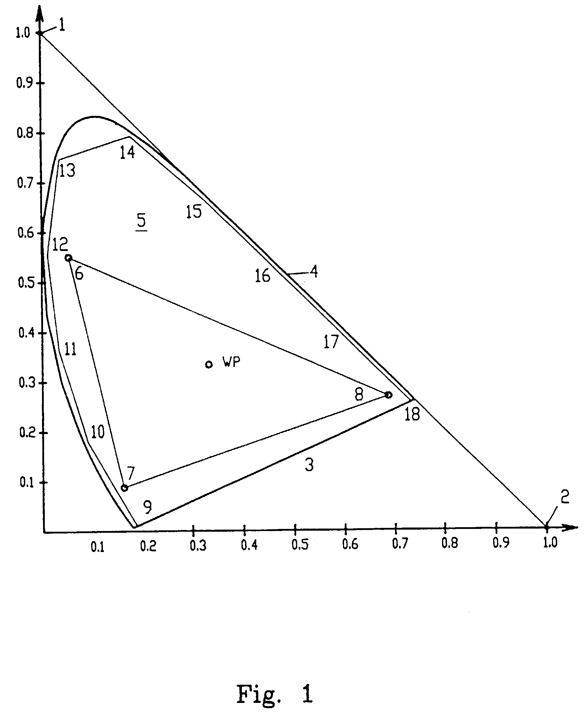

In Figur 1 ist eine an sich bekannte, normierte Farbtafel mit virtuellen, im Spektrum nicht vorhandenen Farben X, Y und Z dargestellt, anhand der sich die Prinzipien der Farbmischung erkennen lassen. Diese Darstellung der Farben in diesem Diagramm mit den virtuellen Farben X, Y und Z hat den Vorteil, daß alle Farben im Bereich der positiven Halbachsen eingetragen werden können. Die Farbe 1 auf der Ordinate der Farbtafel gemäß Figur 1 bei dem Wert 1 ist die virtuelle Farbe Y, während die Farbe 2 auf der Abszisse in Figur 1 bei dem Abszissenwert 1 die virtuelle Farbe X darstellt. Alle reinen Spektralfarben liegen auf der stark gezeichneten Umrandung 4, und zwar liegt die Farbe Blau am Ende der Umrandung 4 etwa beim Punkt 9, während die Farbe Rot am anderen Ende etwa beim Punkt 18 liegt. Auf der Geraden 3 zwischen den Punkten 9 und 18, welche die Enden der bogenförmigen Umrandung 4 verbindet, liegen die Purpurfarbtöne, die Mischfarben aus Rot und Blau sind. Alle übrigen Mischfarben liegen im Inneren des Bereichs 5, der von der Umrandung 4 und der Geraden 3 eingeschlossen ist. Sämtliche Farbwerte, die außerhalb des Bereichs 5 liegen, sind in der Natur nicht vorhanden. Die Mischungen von zwei Spektralfarben liegen auf der ihre Darstellungspunkte verbindenden Geraden. Wählt man im Inneren des Bereichs 5 zwei Mischfarben, so liegen alle Mischungen dieser Mischfarben wieder auf einer die beiden Darstellungspunkte der Mischfarben verbindenden Geraden. Es ist leicht zu erkennen, daß bei einer Mischung von drei Mischfarben alle diese Farben im Inneren eines Dreiecks liegen, welches durch die drei Darstellungspunkte der Ausgangsmischfarben als Dreiecks-Eckpunkte beschrieben wird.

Die durch RGB-Filterung ermittelten Farben sind entsprechend ihrer Gewinnung über Filter mit einem endlichen Durchlaßbereich ebenfalls Mischfarben und daher keine Spektralfarben. Trägt man diese Farben im Diagramm ein, dann liegen die Farben 6 (Grün), 7 (Blau) und 8 (Rot) im Inneren des Bereichs 5 und nicht auf der Umrandung 4. Das diese Farbpunkte verbindende RGB-Dreieck begrenzt dann genau jenen Bereich, der durch diese Farben darstellbar und beschreibbar ist und man erkennt deutlich, daß dieser Bereich sehr viel kleiner als das durch die Spektralfarben dargestellte Gebiet im Inneren der Umrandung 4 ist.

Bei der erfindungsgemäßen Einrichtung erfolgt die Gewinnung der Farbinformation durch Einsatz eines linearen Verlaufsfilters mit einer sehr engen Bandpaßcharakteristik (20 nm) über den ganzen sichtbaren Wellenlängenbereich. Letzteres bedeutet, daß an jedem Ort des Filters ein Wellenlängenbereich von 20 nm im wesentlichen ungeschwächt hindurchzutreten vermag, wobei sich die Mittelwellenlänge in der Ausdehnungsrichtung des Verlaufsfilters jedoch linear mit der Koordinate in dieser Richtung verändert. Kommen bei der Einrichtung nach der Erfindung z. B. zehn separate Photodioden (PIN-Photodioden) zum Einsatz, und trägt man die Einzelmeßwerte dieser zehn Photodioden in das Diagramm gemäß Figur 1 ein, so erhält man ein Umrandungspolygon mit den Stützpunkten 9 bis 18, welches zwar auch innerhalb des Kurvenzugs 4 liegt, sich jedoch erheblich besser diesem Kurvenzug anschmiegt als das durch die Punkte 6, 7 und 8 gebildete RGB-Dreieck. Man erkennt hieraus, daß die Farbscanner-Konstruktion nach der vorliegenden Erfindung einen erheblich größeren Farbbereich erfaßt als eine RGB-Filterung. Zu bemerken ist noch, daß der Abstand der Stützpunkte von der Umrandung 4 zum überwiegenden Teil auf die Integration der auf eine Einzeldiode fallenden Wellenlängenbereiche zurückzuführen ist. Der Anteil, den die Bandpaßcharakteristik zu diesem Abstand beisteuert, ist wesentlich geringer.

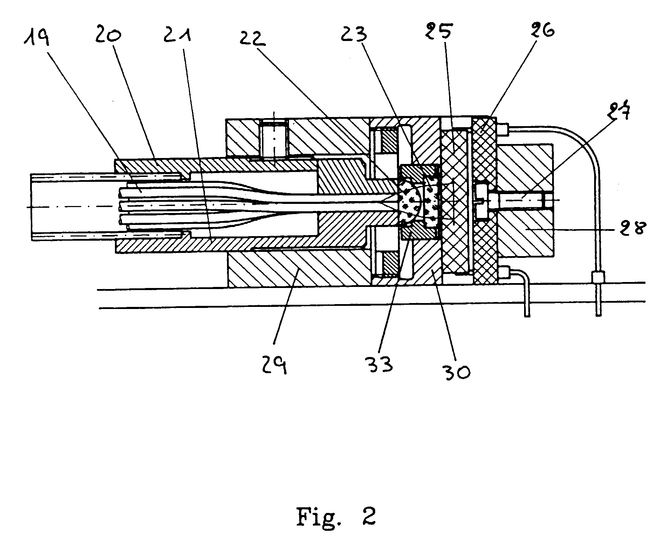

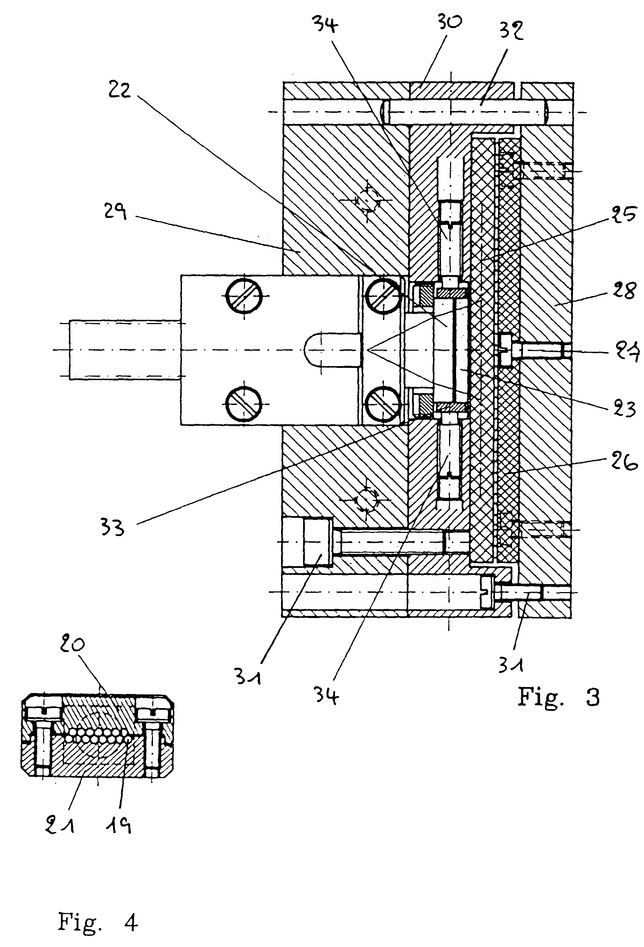

Die Figuren 2, 3 und 4 zeigen den mechanischen Aufbau der erfindungsgemäßen Einrichtung. Lichtleiter 19, in diesem Ausführungsbeispiel fünfzehn Stück, werden von einer nicht mehr dargestellten Scanneroptik zu einer zweiteiligen Fassung, die aus den Teilen 20 und 21 besteht, herangeführt und zwischen diesen beiden Teilen 20, 21 so eingeklemmt, daß diese Lichtleiter 19 durch ein schmales flaches Rechteck umrandet werden. Im vorliegenden Fall liegen die Lichtaustrittsenden von acht Lichtleitern 19 auf einer Geraden, während auf einer parallel dazu liegenden Geraden die Lichtaustrittsenden von weiteren sieben Leichtleitern 19 angeordnet sind. Die Scanneroptik kann z. B. einen Aufbau haben, wie er in der europäischen Patentanmeldung Nr. 94 107 164.9 beschrieben ist. Die aus den Lichtleitern 19 austretenden Strahlenkegel werden in einer Richtung durch eine Zylinderlinse 22 fokussiert und durch einen linearen Verlaufsfilter 23 auf separate PIN-Photodioden 24 gelenkt, die in einem Bauelement 25 als Array vereinigt sind. Das Bauelement 25 sitzt auf einem Sockel 26, der mit Schrauben 27 an einem Grundkörper 28 befestigt ist.

Der Grundkörper 28 ist mit einem Spannkörperoberteil 29 und einem Spannkörpermittelteil 30 verschraubt und verstiftet. Die entsprechenden Schrauben sind mit dem Bezugszeichen 31 und die Stifte mit dem Bezugszeichen 32 versehen.

Die Zylinderlinse 22 ist mit Verlaufsfilter 23 mittels eines Spannrahmens 33 zu einer Baueinheit zusammengefaßt, die über Stellschrauben 34 in Richtung des Filtergradienten verschoben werden kann. Dadurch ist es möglich, den Wellenlängenbereich, der eine einzelne PIN-Photodiode 24 trifft, genau auszujustieren.

Sämtliche Photodioden sind nebeneinanderliegend auf einer Geraden angeordnet, wobei die Richtung des Filtergradienten parallel zu dieser Geraden verläuft. Ebenfalls parallel hierzu verlaufen die Geraden, auf denen sich die Lichtaustrittsenden der Lichtleiter 19 befinden sowie die Längsrichtung der Zylinderlinse 22.

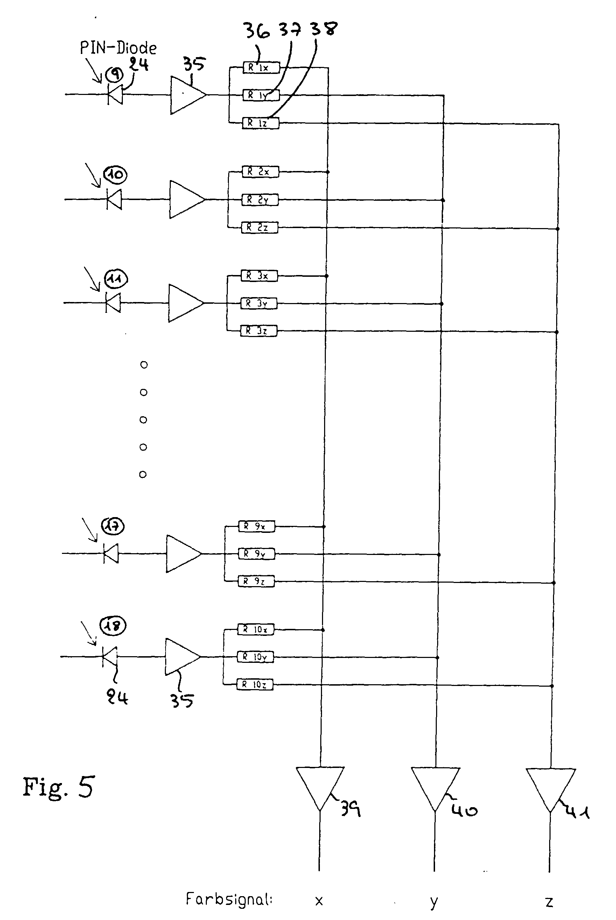

Die Figur 5 zeigt die ausgangsseitige Beschaltung der PIN-Photodioden 24. Es sind, wie bereits erwähnt, z. B. zehn Photodioden 24 vorhanden, die relativ zum Verlaufsfilter 23 so positioniert sind, daß sie sich im Diagramm nach Figur 1 an den Stützpunkten 9 bis 18 befinden. Die Nummern dieser Stützpunkte sind oberhalb der jeweiligen Photodioden 24 in Figur 5 gesondert eingetragen. Mit dem Ausgang einer jeweiligen Photodiode 24 ist jeweils ein Vorverstärker 35 verbunden, dessen Ausgang auf eine Parallelschaltung von jeweils drei Widerständen 36, 37 und 38 geführt ist. Dabei ist der Ausgang des Widerstands 36 mit einem ersten Endverstärker 39, der Ausgang des Widerstands 37 mit einem zweiten Endverstärker 40 und der Ausgang des Widerstands 38 mit einem dritten Endverstärker 41 verbunden. Entsprechendes gilt für die anderen durch jeweils eine der Photodioden gebildeten Meßkanäle, deren Widerstände in der gleichen Weise mit den genannten Endverstärkern 39 bis 41 verbunden sind. An den Ausgängen dieser Endverstärker 39 bis 41 können dann die gewünschten Farbsignale X, Y und Z abgenommen werden. Die Widerstände 36, 37 und 38 selbst weisen unterschiedliche Werte auf und unterscheiden sich darüber hinaus von Meßkanal zu Meßkanal, um in Übereinstimmung mit den aus der Farbmetrik bekannten Normspektralwertkurven den Beitrag des durch jeweils eine der Photodioden 24 gelieferten Meßsignals zu den jeweiligen Farbsignalen zu bestimmen. Die Ausgänge der Endverstärker 39, 40 und 41 sind mit einem Mikrocomputer verbunden, der nun in der Lage ist, anhand der ihm zugeführten Farbsignale X, Y und Z gewünschte Mischfarben zu synthetisieren.

## Patentansprüche

1. Einrichtung zur Ermittlung des Farbwerts eines Lichtstroms, mit einem nur eine Ausdehnungsrichtung aufweisenden, linearen Verlaufsfilter (23), durch den hindurch der Lichtstrom auf eine Anzahl von Photodioden (24) trifft, die in der Ausdehnungsrichtung des Verlaufsfilters (23) nebeneinanderliegend angeordnet sind und zur Lieferung von Meßsignalen dienen, anhand derer der Farbwert berechnet wird, und mit einer vor dem Verlaufsfilter (23) angeordneten Fokussierungsoptik zur Fokussierung des Lichtstroms auf die Photodioden (24), **dadurch gekennzeichnet,** daß
- der Lichtstrom über eine Mehrzahl von Lichtleitfasern (19) zugeführt wird, deren Lichtaustrittsenden entlang einer oder mehrerer sich in der Ausdehnungsrichtung des Verlaufsfilters (23) erstreckender Zeilen dicht nebeneinanderliegend angeordnet sind,
- die Fokussierungsoptik eine sich in der Ausdehnungsrichtung erstreckende Zylinderlinse (22) enthält, und
- die Photodioden (24) als PIN-Dioden ausgebildet sind.

2. Einrichtung nach Anspruch 1, **dadurch gekennzeichnet,** daß die Fokussierungsoptik (22) und der Verlaufsfilter (23) einerseits sowie die Photodioden (24) andererseits in der Ausdehnungsrichtung des Verlaufsfilters (23) relativ zueinander verschiebbar sind.

3. Einrichtung nach Anspruch 2, **dadurch gekennzeichnet,** daß die Fokussierungsoptik (22) und der Verlaufsfilter (23) in einem gemeinsamen Rahmen (33) eingespannt sind.

4. Einrichtung nach Anspruch 3, **dadurch gekennzeichnet,** daß der gemeinsame Rahmen (33) in der Ausdehnungsrichtung des Verlaufsfilters (23) verschiebbar gelagert ist.

5. Einrichtung nach Anspruch 4, **dadurch gekennzeichnet,** daß der gemeinsame Rahmen (33) in einem mittleren Spannkörper (30) liegt, der mit einem Grundkörper (28) starr verbunden ist, welcher die Photodioden (24) trägt.

6. Einrichtung nach Anspruch 5, **dadurch gekennzeichnet,** daß die Photodioden (24) in einem Bauelement (25) als Array vereinigt sind, welches auf einem Sockel (26) sitzt, der am Grundkörper (28) befestigt ist.

7. Einrichtung nach Anspruch 5 oder 6, **dadurch gekennzeichnet,** daß auf der dem Grundkörper (28) abgewandten Seite des mittleren Spannkörpers (30) mit diesem ein äußerer Spannkörper (29) starr verbunden ist, welcher die Lichtaustrittsenden der Lichtleitfasern (19) fest aufnimmt.

8. Einrichtung nach Anspruch 5, 6 oder 7, **dadurch gekennzeichnet,** daß die genannten Körper (28, 29, 30) miteinander verstiftet sind.

9. Einrichtung nach einem der Ansprüche 1 bis 8, **dadurch gekennzeichnet,** daß der lineare Verlaufsfilter (23) eine Bandpaßcharakteristik von 20 nm aufweist.

10. Einrichtung nach einem der Ansprüche 1 bis 9, **dadurch gekennzeichnet,** daß jede der Photodioden (24) über einen Vorverstärker (35) mit einer Parallelschaltung aus drei Widerständen (36, 37, 38) verbunden ist, die ausgangsseitig mit unterschiedlichen Eingängen von insgesamt drei vorhandenen Endverstärkern (39, 40, 41) verbunden sind.

11. Einrichtung nach einem der Ansprüche 1 bis 10, **dadurch gekennzeichnet,** daß sie größenordnungsmäßig etwa zehn Photodioden (24) enthält.

12. Einrichtung nach einem der Ansprüche 1 bis 11, **dadurch gekennzeichnet,** daß alle Lichteingangsenden der Lichtleitfasern (19) auf ein und denselben Punkt gerichtet sind.

## Claims

1. Device for determining the colour value of a light flux, having a linear graded interference filter (23), which has only one expansion direction and through which the light flux is incident on a number of photodiodes (24), which are arranged adjacent to one another in the expansion direction of the graded interference filter (23) and are used to supply measuring signals, on the basis of which the colour value is calculated, and having focusing optics arranged in front of the graded interference filter (23) and intended for focusing the light flux onto the photodiodes (24), characterized in that
- the light flux is fed via a plurality of optical fibres (19), whose light exit ends are arranged closely adjacent to one another along one or more rows extending in the expansion direction of the graded interference filter (23),
- the focusing optics contain a cylindrical lens (22) extending in the expansion direction, and
- the photodiodes (24) are designed as PIN diodes.

2. Device according to Claim 1, characterized in that the focusing optics (22) and the graded interference filter (23), on the one hand, and the photodiodes (24), on the other hand, can be displaced relative to one another in the expansion direction of the graded interference filter (23).

3. Device according to Claim 2, characterized in that the focusing optics (22) and the graded interference filter (23) are clamped in a common frame (33).

4. Device according to Claim 3, characterized in that the common frame (33) is supported so as to be displaceable in the expansion direction of the graded interference filter (23).

5. Device according to Claim 4, characterized in that the common frame (33) lies in a central clamping body (30), which is rigidly connected to a basic body (28), which carries the photodiodes (24).

6. Device according to Claim 5, characterized in that the photodiodes (24) are combined in one component (25) as an array, which is seated on a base (26) which is fastened to the basic body (28).

7. Device according to Claim 5 or 6, characterized in that, on that side of the central clamping body (30) facing away from the basic body (28), an outer clamping body (29), which receives the light exit ends of the optical fibres (19) in a fixed manner, is rigidly connected to the said central clamping body (30).

8. Device according to Claim 5, 6 or 7, characterized in that the said bodies (28, 29, 30) are pinned to one another.

9. Device according to one of Claims 1 to 8, characterized in that the linear graded interference filter (23) has a band pass characteristic of 20 nm.

10. Device according to one of Claims 1 to 9, characterized in that each of the photodiodes (24) is connected, via a preamplifier (35), to a parallel circuit of three resistors (36, 37, 38), which are connected on the output side to various inputs of a total of three output amplifiers (39, 40, 41) present.

11. Device according to one of Claims 1 to 10, characterized in that it contains approximately ten photodiodes (24).

12. Device according to one of Claims 1 to 11, characterized in that all the light input ends of the optical fibres (19) are directed onto one and the same point.

## Revendications

1. Dispositif fournissant la valeur chromatique d'un flux lumineux muni d'un filtre dégradé linéaire (23) ne présentant qu'une seule direction d'extension, à travers lequel le flux lumineux rencontre une pluralité de photodiodes (24) disposées l'une à côté de l'autre selon la direction d'extension du filtre dégradé (23) et qui sert à fournir des signaux de mesure à partir desquels la valeur chromatique est calculée, et avec un système optique de focalisation disposé en amont du filtre dégradé (23) pour la focalisation du flux lumineux sur les photodiodes (24), caractérisé en ce que:
- le flux lumineux est guidé au moyen d'une pluralité de fibres optiques (19) dont les extrémités de sortie de la lumière sont disposées étroitement les unes à côté des autres selon une ou plusieurs lignes s'étendant selon la direction d'extension du filtre dégradé (23);
- le système optique de focalisation comporte une lentille cylindrique (22) qui s'étend selon la direction d'extension, et
- les photodiodes (24) sont constituées de diodes PIN.

2. Dispositif selon la revendication 1, caractérisé en ce que le système optique de focalisation (22) et le filtre dégradé (23) d'une part et les photodiodes (24) d'autre part sont susceptibles d'être déplacés selon la direction d'extension du filtre dégradé (23) les uns par rapport aux autres.

3. Dispositif selon la revendication 2, caractérisé en ce que le système optique de focalisation (22) et le filtre dégradé (23) sont fixés dans un cadre commun (33).

4. Dispositif selon la revendication 3, caractérisé en ce que le cadre commun (33) est monté afin de pouvoir coulisser selon la direction d'extension du filtre dégradé (23).

5. Dispositif selon la revendication 4, caractérisé en ce que le cadre commun (33) est situé dans un corps central de serrage (30) qui est relié de façon rigide à un corps de base (28), ce dernier portant les photodiodes (24).

6. Dispositif selon la revendication 5, caractérisé en ce que les photodiodes (24) sont réunies sous forme d'un réseau ou matrice dans un organe amovible (25) disposé sur un socle (26), ce dernier étant fixé sur le corps de base (28).

7. Dispositif selon la revendication 5 ou 6, caractérisé en ce que un corps de serrage extérieur (6) est relié de façon rigide au corps de serrage central (30) sur la face de ce dernier opposée au corps de base (28), ce corps de serrage extérieur recevant de façon rigide les extrémités de sortie de lumière des fibres optiques (19).

8. Dispositif selon la revendication 5, 6 ou 7, caractérisé en ce que lesdits corps (28, 29, 30) sont indexés l'un par rapport à l'autre.

9. Dispositif selon l'une des revendications 1 à 8, caractérisé en ce que le filtre dégradé linéaire (23) présente une caractéristique passe-bande de 20 nm.

10. Dispositif selon l'une des revendications 1 à 9, caractérisé en ce que chacune des photodiodes (24) est reliée, via un préamplificateur (35) à un circuit parallèle composé de trois résistances (36, 37, 38), qui du côté de la sortie, sont reliées à différentes entrées d'un total de trois amplificateurs de sortie (39, 40, 41).

11. Dispositif selon l'une des revendications 1 à 10, caractérisé en ce qu'il comprend un ordre de grandeur d'environ dix photodiodes (24).

12. Dispositif selon l'une des revendications 1 à 11, caractérisé en ce que toutes les extrémités d'entrée de lumière des fibres optiques (19) sont dirigées vers un seul et le même point.
